(19) Europäisches Patentamt / European Patent Office / Office européen des brevets

(11) **EP 4 358 183 B1**

(12) **EUROPEAN PATENT SPECIFICATION**

(45) Date of publication and mention
of the grant of the patent:
**13.08.2025 Bulletin 2025/33**

(21) Application number: **23171767.9**

(22) Date of filing: **05.05.2023**

(51) International Patent Classification (IPC):
*H01M 4/36* (2006.01)    *H01M 4/38* (2006.01)
*H01M 4/505* (2010.01)    *H01M 4/525* (2010.01)
*H01M 4/58* (2010.01)    *H01M 4/587* (2010.01)
*H01M 10/0525* (2010.01)    *H01M 10/0587* (2010.01)

(52) Cooperative Patent Classification (CPC):
**H01M 10/0525; H01M 4/364; H01M 4/386;**
**H01M 4/505; H01M 4/525; H01M 4/5825;**
**H01M 4/587; H01M 10/0587;** Y02E 60/10

(54) **BATTERY AND METHOD FOR PREPARING BATTERY**

BATTERIE UND VERFAHREN ZUR HERSTELLUNG DER BATTERIE

BATTERIE ET PROCÉDÉ DE PRÉPARATION DE BATTERIE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **20.10.2022 CN 202211286730**

(43) Date of publication of application:
**24.04.2024 Bulletin 2024/17**

(73) Proprietor: **CALB Group Co., Ltd.**
**Changzhou City, Jiangsu Province (CN)**

(72) Inventor: **LU, Yongqiang**
**Changzhou City (CN)**

(74) Representative: **Becker, Eberhard**
**Becker Kurig & Partner**
**Patentanwälte mbB**
**Bavariastraße 7**
**80336 München (DE)**

(56) References cited:
EP-A1- 3 958 362       JP-A- 2018 147 594
US-A1- 2017 170 512

- AN SEONG JIN ET AL: "Electrolyte Volume
Effects on Electrochemical Performance and
Solid Electrolyte Interphase in Si-Graphite/NMC
Lithium-Ion Pouch Cells", APPLIED MATERIALS
& INTERFACES, vol. 9, no. 22, 15 May 2017
(2017-05-15), US, pages 18799 - 18808,
XP093137178, ISSN: 1944-8244, DOI: 10.1021/
acsami.7b03617
- LANDA-MEDRANO IMANOL ET AL: "Insights into
the Electrochemical Performance of 1.8 Ah
Pouch and 18650 Cylindrical NMC:LFP|Si:C
Blend Li-ion Cells", BATTERIES, vol. 8, no. 8, 18
August 2022 (2022-08-18), pages 97,
XP093137587, ISSN: 2313-0105, DOI: 10.3390/
batteries8080097

## Description

## BACKGROUND

Technical Field

The disclosure belongs to the technical field of batteries, and in particular, relates to a battery and a method for preparing the battery.

Description of Related Art

At present, secondary batteries represented by lithium-ion batteries are new types of batteries with high energy density and have become important and indispensable power accessories for communication products such as mobile phones, mobile DVDs, and handheld computers.

In a lithium-ion battery, the internal structure of the lithium-ion battery is generally positioned and protected by the battery shell. The core of the internal structure of a lithium-ion battery is formed by the interaction of a dry electrode core and an electrolyte. During the manufacturing process of a lithium-ion battery, the battery needs to be charged and activated for the first time. In the first charging reaction of the battery (that is, the formation reaction of the battery), a solid electrolyte interface or SEI film will be formed on the surface of the negative electrode active material wetted by the electrolyte. During the formation process of the battery, a series of electrochemical reactions are accompanied, and the electrolyte generates gas, so that the internal pressure of the battery increases. If the amount of gas generated is excessively large, the battery may be deformed, and such deformation may adversely affect the thickness and safety of the battery. When the internal pressure of the gas generated by the electrolyte in the battery shell reaches the opening pressure of the safety valve of the battery, the safety valve of the battery will open, and the battery capacity may thus drop significantly.

EP 3958362 A1 refers to secondary battery and battery module, battery pack and apparatus including the secondary battery. In particular, the secondary battery includes a housing as well as an electrode assembly and an electrolyte contained in the housing; the electrode assembly includes a positive electrode plate, a negative electrode plate and a separator, and the positive electrode plate includes a positive current collector and a positive electrode film that is disposed on at least one surface of the positive electrode current collector and includes a positive electrode active material; the positive electrode active material includes one or more of lithium nickel cobalt manganese oxide and lithium nickel cobalt aluminum oxide; the negative electrode plate includes a negative electrode current collector and a negative electrode film that is disposed on at least one surface of the negative electrode current collector and includes a negative electrode active material; the negative electrode active material includes silicon-based material and carbon material; and the secondary battery satisfies: $0.05 \leq Z \leq 0.6$. The secondary battery has the characteristics including high energy density, fast charging and long cycle life.

US 2017/170512 A1 relates to an electrochemical device, which comprises: a case; an electrode assembly positioned within the case, the electrode assembly comprising a positive electrode, a negative electrode and a separator interposed between the positive electrode and the negative electrode; an electrolyte which is injected into the case, wherein the volume EV of a free space calculated from Equation 2 is 0-45 volume % with respect to the entire volume CV of an empty space within the case calculated from Equation 1. The contents of Equations 1 and 2 are as set forth in the description.

JP 2018147594 A relates to a nonaqueous electrolyte battery arranged to be able to show a high volume energy density and superior safety. The nonaqueous electrolyte battery according to the embodiment comprises: a container; an electrode group enclosed in the container; and a nonaqueous electrolyte solution enclosed in the container. The container includes a gasrelease mechanism. The nonaqueous electrolyte solution contains a solvent having a boiling point within a range of 85°C or above and 130°C or below. The ratio A/B and the ratio B/C fall within the following ranges: $0.55 \leq A/B \leq 0.7$ (1); and $1.2 \leq B/C \leq 1.35$ (2), where A is a volume [cm] of a cavity in the container, excluding a cavity of the electrode group, B is a volume [cm] of the nonaqueous electrolyte solution, and C is a volume [cm] of a cavity of the electrode group.

An Seong Jin et al. ("Electrolyte Volume Effects on Electrochemical Performance and Solid Electrolyte Interphase in Si-Graphite/NMC Lithium-Ion Pouch Cells", Applied Materials & Interfaces, vol. 9, no. 22, 15 May 2017, pages 18799-18808) aims to explore the correlations between electrolyte volume, electrochemical performance, and properties of the solid electrolyte interphase in pouch cells with Si-graphite composite anodes.

Landa-Medrano Imanol et al. ("Insights into the Electrochemical Performance of 1.8 Ah Pouch and 18650 Cylindrical NMC:LFP Si:C Blend Li-ion Cells", Batteries, vol. 8, no. 8, Aug. 2022, page 97.) teaches the assembly of high-capacity (1.8Ah) cells using a nanoparticulate silicon-graphite (1:7.1) blend as the negative electrode material and a LiFePO4-LiNi0.5Mn0.2Co0.2O2 (1:1) blend as the positive electrode, and teaches strategies for mitigating the issues associated with the excessive volumetric changes of Si.

## SUMMARY

The disclosure aims to provide a battery and a method for preparing the battery, so that the battery product exhibits both good electrical performance and safety performance.

According to the first aspect of the disclosure, the disclosure provides a battery including a battery shell, a cell assembly, and an electrolyte. The electrolyte and the cell assembly are disposed in a containing space of the battery shell, and the electrolyte remaining in the containing space is a free electrolyte. A volume of the containing space is V0, a volume of the cell assembly is V1, a volume of the free electrolyte is Vt, and the battery satisfies $\frac{Vt}{V0-V1}=5\%$ to 50%. The free electrolyte refers to the electrolyte solution remaining in the containing space of the battery shell, specifically, the electrolyte that can flow out from the battery shell after the battery shell is opened and the battery shell is turned upside down and left to stand for a certain period of time.

The battery generates gas during the charging and discharging cycle, and the gas is stored in the battery shell. The battery shell is also provided with free electrolyte, which occupies part of the space of the casing. In the battery product provided by the disclosure, the electrolyte loading capacity is moderate. In this way, the lithium-ion battery maintains good cycle performance, and enough gas storage space is left for subsequent gas production. Further, in the containing space of the battery shell, the safety valve is prevented from opening prematurely due to excessive internal pressure reaching the opening pressure of the explosion-proof valve, so that the battery product exhibits both good cycle characteristics and safety.

## DESCRIPTION OF THE EMBODIMENTS

According to the first aspect of the disclosure, a battery including a battery shell, a cell assembly, and an electrolyte is provided. The electrolyte and the cell assembly are disposed in a containing space of the battery shell, and the electrolyte remaining in the containing space is a free electrolyte. A volume of the containing space is V0, a volume of the cell assembly is V1, a volume of the free electrolyte is Vt, and the battery satisfies $\frac{Vt}{V0-V1}=5\%$ to 50%.

Preferably, a positive pole piece includes a positive electrode active material, and the positive electrode active material includes at least one of lithium iron phosphate, lithium cobalt oxide, lithium manganate, lithium nickel cobalt manganese oxide, lithium manganese iron phosphate, and lithium nickel manganese oxide. The negative pole piece includes a negative electrode active material, and the negative electrode active material comprises graphite.

In the battery provided by the disclosure, the negative electrode active material is graphite, the positive electrode active material is lithium iron phosphate, and the battery satisfies $\frac{Vt}{V0-V1}=30\%$ to 50%.

Preferably, the negative electrode active material is graphite, and the positive electrode active material is lithium nickel cobalt manganese oxide. A material composition of the lithium nickel cobalt manganese oxide satisfies the following general formula $LiNi_xCo_yMn_{(1-x-y)}O_2$, in the general formula, $0.5 \leq x \leq 0.9$ and $0.05 \leq y \leq 0.2$, and the battery satisfies $\frac{Vt}{V0-V1}=15\%$ to 50%.

Preferably, in the general formula $LiNi_xCo_yMn_{(1-x-y)}O_2$, $0.5 \leq x \leq 0.7$, and the battery satisfies $\frac{Vt}{V0-V1}=20\%$ to 50%. In the case of using the same positive electrode active material and using the same negative electrode active material, the cycle performance of the lithium battery with this structural feature is improved.

Preferably, in the general formula $LiNi_xCo_yMn_{(1-x-y)}O_2$, $0.7 < x \leq 0.9$, and the battery satisfies $\frac{Vt}{V0-V1}=15\%$ to 40%. In the case of using the same positive electrode active material and using the same negative electrode active material, the cycle performance of the lithium battery with this structural feature is improved.

In the battery provided by the disclosure, the negative electrode active material further includes a silicon-based material, and a content of the silicon-based material in the negative electrode active material is 3% to 10% calculated by mass percentage.

Preferably, the silicon-based material includes at least one of silicon oxide, nano silicon, silicon carbon, and silicon alloy. Herein, the general formula of the silicon oxide is $SiO_x$, $0<x<2$.

Preferably, the positive electrode active material is lithium iron phosphate, and the battery satisfies

$$\frac{Vt}{V0-V1} = 20\%$$

to 50%.

Preferably, the positive electrode active material is lithium nickel cobalt manganese oxide. The material composition of the lithium nickel cobalt manganese oxide satisfies the following general formula $LiNi_xCo_yMn_{(1-x-y)}O_2$, in the general formula, $0.5 \leq x \leq 0.9$ and $0.05 \leq y \leq 0.2$, and the battery satisfies $\frac{Vt}{V0-V1} = 5\%$ to 40%.

Preferably, in the general formula $LiNi_xCo_yMn_{(1-x-y)}O_2$, $0.5 \leq x \leq 0.7$, and the battery satisfies $\frac{Vt}{V0-V1} = 10\%$ to 40%.

Preferably, in the general formula $LiNi_xCo_yMn_{(1-x-y)}O_2$, $0.7 < x \leq 0.9$, and the battery satisfies $\frac{Vt}{V0-V1} = 5\%$ to 30%.

In order to enable a person having ordinary skill in the art to better understand the solutions of the disclosure, the technical solutions in the embodiments of the disclosure will be clearly and completely described below. Apparently, the described embodiments are only some of the embodiments of the disclosure, not all of the embodiments.

In the following examples, a method for measuring the volume of the cell assembly (including measurement of a total volume of the winding cell, tab assembly, connecting sheet assembly, and insulating component) is provided as follows. A ruler is used to measure a length and a width of the winding cell (thickness is a thickness of the winding cell after formation into a constant volume), and the volume of the winding cell is calculated. The tab assembly, connecting sheet assembly, insulating component, etc. are removed, and a weight is weighed with a balance, and the volume of each assembly is calculated according to material density. A sum of the calculated volume of the winding cell and the total volume of the tab assembly, the battery switching piece, and other components is treated as the total volume of the cell assembly. Herein, in the examples or comparative examples in which the cell assembly is obtained by the winding process, a corner cross-section of the wound battery is semicircular, which needs to be considered when calculating the volume of the cell.

Example 1

1. Preparation of Lithium-ion Battery

In this example, a lithium-ion battery is prepared according to the following method:

1) Preparation of the positive electrode: the positive electrode active material $LiNi_{0.6}Co_{0.1}Mn_{0.3}O_2$, the conductive agent acetylene black, and the binder PVDF were mixed in a mass ratio of 97:1:2, and then the solvent NMP was added to the resulting mixed material. The mixture was stirred under the action of a vacuum mixer until the system was uniform, and the positive electrode slurry was obtained. The positive electrode slurry was evenly coated on a positive electrode current collector, dried at room temperature, transferred to an oven for further drying, and then cold pressed and cut according to the required specifications to obtain a positive pole piece.

2) Preparation of the negative electrode: the negative electrode active material graphite, the conductive agent acetylene black, the thickener CMC, and the binder SBR were mixed in a mass ratio of 96.2:0.8:1.2:1.8, and then the solvent deionized water was added to the resulting mixed material. The mixture was stirred under the action of a vacuum mixer until the system was uniform, and the negative electrode slurry was obtained. The negative electrode slurry was evenly coated on a negative electrode current collector, dried at room temperature, transferred to an oven for further drying, and then cold pressed and cut according to required specifications to obtain a negative pole piece.

3) Assembly of the cell assembly: the positive pole piece, the separator film, and the negative pole piece were stacked in sequence so that the separator film was placed between the positive and negative pole pieces for isolation, and the cell assembly was then obtained through the process of winding or stacking.

4) Liquid injection, chemical formation, and constant volume formation: the cell assembly was placed in the containing space of the battery shell, and after drying, the electrolyte was injected into the containing space of the battery shell. The lithium-ion battery of this example was obtained through processes such as vacuum packaging, standing still, formation, and shaping.

According to the above method, different experimental groups and comparative experimental groups are set by changing the volume V0 of the containing space of the battery shell, the total volume of the cell assembly, and the injection volume of the electrolyte as variables. The product information of each experimental group and each comparative experimental group is shown in Table 1. Among the groups, the external dimensions of the batteries and the cell dimensions of the experimental group 1-1, the experimental group 1-2, the experimental group 1-3, the experimental group 1-5, the comparative experimental group 1-1, and the comparative experimental group 1-2 are all the same. The external dimensions of the batteries, the dimensions of the inner cavities of the battery shells, and the dimensions of the cells of the experimental group 1-4, the experimental group 1-6, the experimental group 1-7, the comparative experimental group 1-3, and the comparative experimental group 1-4 are all the same.

Table 1: product information of each experimental group and each comparative experimental group in this example

| Group | Cell Assembly Process | Containing space Volume $V_0$/mL | Total Volume of Cell Assembly $V_1$/mL | Electrolyte Injection Volume/mL |
|---|---|---|---|---|
| Experimental Group 1-1 | winding | 1012 | 935.6 | 395 |
| Experimental Group 1-2 | winding | 1012 | 935.6 | 401 |
| Experimental Group 1-3 | winding | 1012 | 935.6 | 409 |
| Experimental Group 1-4 | stacking | 998 | 932.4 | 388 |
| Experimental Group 1-5 | winding | 1012 | 935.6 | 426 |
| Experimental Group 1-6 | stacking | 998 | 932.4 | 475 |
| Experimental Group 1-7 | stacking | 998 | 932.4 | 490 |
| Comparative Experimental Group 1-1 | winding | 1012 | 935.6 | 388 |
| Comparative Experimental Group 1-2 | winding | 1012 | 935.6 | 426 |
| Comparative Experimental Group 1-3 | stacking | 998 | 932.4 | 460 |
| Comparative Experimental Group 1-4 | stacking | 998 | 932.4 | 500 |

Test Example 1

1. Test Object

The lithium-ion battery prepared in Example 1 was used as the test object of this test example.

2. Test Items

(1) Volume of free electrolyte

The upper part of the lithium-ion battery as the test object was opened with a small opening, and the lithium-ion battery was placed upside down and left to stand for 30 minutes. The free electrolyte in the containing space of the battery shell was allowed to completely flow into a container, a balance was used to weigh the weight of the electrolyte flowing out, and a densitometer was used to measure the density to calculate the free electrolyte volume Vt.

(2) Cycle Performance of Lithium-ion Battery

At 45°C, the lithium-ion battery as the test object was charged at a rate of 1C and discharged at a rate of 1C, and a full-charging and full-discharging cycle test was performed until the capacity of the lithium-ion battery decayed to 80% of the initial capacity. The number of cycles was recorded, and it was observed whether the battery exhaust valve opened in the EOL state. The purpose of cycling at high temperature was to speed up aging and gas production.

3. Test Results:

The product structure parameters and performance indicators of the test objects in the examples are shown in Table 2. It can be seen from the data shown in Table 2 that the product structures of the lithium-ion batteries prepared in the comparative experimental groups 1-1 to 1-4 do not satisfy the relational formula $5\% \leq \frac{Vt}{V0-V1} \leq 50\%$ . During the test process of the test examples, the abovementioned test products experienced valve opening, a rapid drop in capacity, or both. This shows that the working stability of these test products is poor. Herein, the lithium-ion batteries of the comparative experimental group 1-1 and the comparative experimental group 1-3 belong to the product structure of $\frac{Vt}{V0-V1}<5\%$. The amount of free electrolyte in the battery shells of these two groups of lithium-ion batteries is relatively small, and the lithium-ion transmission rate becomes poor, so lithium-ion precipitation is likely to occur at the negative electrode after these two groups of lithium-ion batteries are put into work. When lithium at the negative electrode accumulates to a certain extent, lithium dendrites may form, and a risk of lithium dendrites penetrating the separator film and causing direct short-circuiting of the positive and negative electrodes may occur. The lithium-ion batteries of the comparative experimental group 1-2 and the comparative experimental group 1-4 belong to the product structure of $\frac{Vt}{V0-V1}>50\%$. These two groups of lithium-ion batteries have more free electrolyte in the battery shell, so these two groups of lithium-ion batteries have a higher lithium-ion transmission rate. However, since the volume of the containing space of the battery shell is constant, after a part of the volume of the containing space is occupied by the free electrolyte, the remaining volume that can be used to store gas is relatively less. As such, there is not enough space for the gas produced by the lithium-ion battery during the cycle charging and discharging process. As a result, the pressure in the containing space of the battery shell increases excessively fast, and it is easy to reach the opening pressure of the explosion-proof valve, and the explosion-proof valve bursts open. The product structures of the lithium-ion batteries prepared in the experimental groups 1-1 to 1-7 satisfy the relational formula $5\%\leq\frac{Vt}{V0-V1}\leq50\%$, and all of the batteries exhibit good cycle characteristics. During the test process of the test examples, the safety valves of the abovementioned test products did not open, and there was no rapid drop in battery capacity. This shows that these test products exhibit good safety and working stability. In the experimental groups 1-1 to 1-7, the structural parameter corresponding to the lithium-ion battery of the experimental group 1-4 is $\frac{Vt}{V0-V1}\leq20\%$. The number of cycles corresponding to this test product is significantly lower than that of the test product of the experimental group 1-6 with the same battery shell specifications and cell assembly specifications. It can thus be explained that when $LiNi_{0.6}Co_{0.1}Mn_{0.3}O_2$ is used as the positive electrode active material and graphite is used as the negative electrode active material, by setting the structure of the lithium-ion battery to satisfy $20\%\leq\frac{Vt}{V0-V1}\leq50\%$, the number of cycles of the lithium-ion battery can be increased to further improve its cycle performance.

Table 2: product structures and performance indicators of the test subjects in test example 1

| Test Product | V0 /mL | V1 /mL | Volume of Free Electrolyte Vt (mL) | $\frac{Vt}{V0-V1}$ | Cycle Performance/ Cycles | Remark |
|---|---|---|---|---|---|---|
| Experimental Group 1-1 | 1012 | 935.6 | 17 | 22.25% | 1320 | no valve opening during cycle |
| Experimental Group 1-2 | 1012 | 935.6 | 23 | 30.10% | 1410 | no valve opening during cycle |
| Experimental Group 1-3 | 1012 | 935.6 | 31 | 40.58% | 1220 | no valve opening during cycle |
| Experimental Group 1-4 | 998 | 932.4 | 9 | 13.72% | 1110 | no valve opening during cycle |
| Experimental Group 1-5 | 1012 | 935.6 | 38 | 49.74% | 1210 | no valve opening during cycle |
| Experimental Group 1-6 | 998 | 932.4 | 14 | 21.34% | 1320 | no valve opening during cycle |
| Experimental Group 1-7 | 998 | 932.4 | 26 | 39.63% | 1228 | no valve opening during cycle |
| Comparative Experimental Group 1-1 | 1012 | 935.6 | 3 | 3.93% | 820 | no valve opening during cycle, but capacity drops rapidly |

(continued)

| Test Product | V0 /mL | V1 /mL | Volume of Free Electrolyte Vt (mL) | $\frac{Vt}{V0-V1}$ | Cycle Performance/ Cycles | Remark |
|---|---|---|---|---|---|---|
| Comparative Experimental Group 1-2 | 1012 | 935.6 | 42 | 54.97% | 880 | valve opening during cycle, and capacity drops rapidly |
| Comparative Experimental Group 1-3 | 998 | 932.4 | 3 | 4.57% | 910 | no valve opening during cycle, but capacity drops rapidly |
| Comparative Experimental Group1-4 | 998 | 932.4 | 40 | 60.98% | 820 | valve opening during cycle, and capacity drops rapidly |

Example 2

1. Preparation of Lithium-ion Battery

In this example, a lithium-ion battery is prepared according to the following method:

1) Preparation of the positive electrode: the positive electrode active material $LiNi_{0.8}Co_{0.1}Mn_{0.1}O_2$, the conductive agent acetylene black, and the binder PVDF were mixed in a mass ratio of 97:1:2, and then the solvent NMP was added to the resulting mixed material. The mixture was stirred under the action of a vacuum mixer until the system was uniform, and the positive electrode slurry was obtained. The positive electrode slurry was evenly coated on a positive electrode current collector, dried at room temperature, transferred to an oven for further drying, and then cold pressed and cut according to the required specifications to obtain a positive pole piece.

2) Preparation of the negative electrode: the negative electrode active material graphite, the conductive agent acetylene black, the thickener CMC, and the binder SBR were mixed in a mass ratio of 96.2:0.8:1.2:1.8, and then the solvent deionized water was added to the resulting mixed material. The mixture was stirred under the action of a vacuum mixer until the system was uniform, and the negative electrode slurry was obtained. The negative electrode slurry was evenly coated on a negative electrode current collector, dried at room temperature, transferred to an oven for further drying, and then cold pressed and cut according to required specifications to obtain a negative pole piece.

3) Assembly of the cell assembly: the positive pole piece, the separator film, and the negative pole piece were stacked in sequence so that the separator film was placed between the positive and negative pole pieces for isolation, and the cell assembly was then obtained through the process of winding.

4) Liquid injection, chemical formation, and constant volume formation: the cell assembly was placed in the containing space of the battery shell, and after drying, the electrolyte was injected into the containing space of the battery shell. The lithium-ion battery of this example was obtained through processes such as vacuum packaging, standing still, formation, and shaping.

According to the above method, different experimental groups and comparative experimental groups are set by changing the volume V0 of the containing space of the battery shell, the total volume of the cell assembly, and the injection volume of the electrolyte as variables. The product information of each experimental group and each comparative experimental group is shown in Table 3. Among the groups, the external dimensions of the batteries, the dimensions of the inner cavities of the battery shells, and the dimensions of the cells of the experimental group 2-1, the experimental group 2-2, the experimental group 2-3, the experimental group 2-4, and the experimental group 2-5 are all the same.

Table 3: product information of each experimental group and each comparative experimental group in this example

| Group | Cell Assembly Process | Containing space Volume VO/mL | Total Volume of Cell Assembly V1/mL | Electrolyte Injection Volume /mL |
|---|---|---|---|---|
| Experimental Group 2-1 | winding | 1012 | 935.6 | 391 |
| Experimental Group 2-2 | winding | 1012 | 935.6 | 395 |
| Experimental Group 2-3 | winding | 1012 | 935.6 | 400 |

(continued)

| Group | Cell Assembly Process | Containing space Volume VO/mL | Total Volume of Cell Assembly V1/mL | Electrolyte Injection Volume /mL |
|---|---|---|---|---|
| Experimental Group 2-4 | winding | 1012 | 935.6 | 385 |
| Experimental Group 2-5 | winding | 1012 | 935.6 | 418 |

Test Example 2

1. Test Object

The lithium-ion battery prepared in Example 2 was used as the test object of this test example.

2. Test Items

(1) Volume of free electrolyte

The upper part of the lithium-ion battery as the test object was opened with a small opening, and the lithium-ion battery was placed upside down and left to stand for 30 minutes. The free electrolyte in the containing space of the battery shell was allowed to completely flow into a container, a balance was used to weigh the weight of the electrolyte flowing out, and a densitometer was used to measure the density to calculate the free electrolyte volume Vt.

(2) Cycle Performance of Lithium-ion Battery

At 45°C, the lithium-ion battery as the test object was charged at a rate of 1C and discharged at a rate of 1C, and a full-charging and full-discharging cycle test was performed until the capacity of the lithium-ion battery decayed to 80% of the initial capacity. The number of cycles was recorded, and it was observed whether the battery exhaust valve opened in the EOL state. The purpose of cycling at high temperature was to speed up aging and gas production.

3. Test Results:

The product structure parameters and performance indicators of the test objects in the examples are shown in Table 4. The product structures of the lithium-ion batteries prepared in the experimental groups 2-1 to 2-5 satisfy the relational formula $5\% \leq \frac{Vt}{V0-V1} \leq 50\%$, and all of the batteries exhibit good cycle characteristics. During the test process of the test examples, the safety valves of the abovementioned test products did not open. This shows that these test products exhibit good safety and working stability. In the experimental groups 2-1 to 2-5, the structural parameter $\frac{Vt}{V0-V1}$ of the experimental group 2-4 corresponding to the lithium-ion battery is <15%, while the structural parameter $\frac{Vt}{V0-V1}$ of the experimental group 2-5>40%. The number of cycles corresponding to the lithium-ion batteries of these two groups is relatively small. It can thus be explained that when $LiNi_{0.8}Co_{0.1}Mn_{0.1}O_2$ is used as the positive electrode active material and graphite is used as the negative electrode active material, by setting the structure of the lithium-ion battery to satisfy $15\% \leq \frac{Vt}{V0-V1} \leq 40\%$, the number of cycles of the lithium-ion battery can be increased to further improve its cycle performance.

Table 4: product structures and performance indicators of the test subjects in test example 2

| Test Product | V0 /mL | V1 /mL | Volume of Free Electrolyte Vt(mL) | $\frac{Vt}{V0-V}$ | Cycle Performance/ Cycles | Remark |
|---|---|---|---|---|---|---|
| Experimental Group 2-1 | 1012 | 935.6 | 12 | 15.71 % | 1020 | no valve opening during cycle |

(continued)

| Test Product | V0 /mL | V1 /mL | Volume of Free Electrolyte Vt(mL) | $\dfrac{Vt}{V0-V}$ | Cycle Performance/ Cycles | Remark |
|---|---|---|---|---|---|---|
| Experimental Group 2-2 | 1012 | 935.6 | 17 | 22.25 % | 1100 | no valve opening during cycle |
| Experimental Group 2-3 | 1012 | 935.6 | 21 | 27.49 % | 1160 | no valve opening during cycle |
| Experimental Group 2-4 | 1012 | 935.6 | 6 | 7.85% | 880 | no valve opening during cycle, but capacity drops rapidly |
| Experimental Group 2-5 | 1012 | 935.6 | 36 | 47.12 % | 900 | no valve opening during cycle |

Example 3

1. Preparation of Lithium-ion Battery

In this example, a lithium-ion battery is prepared according to the following method:

1) Preparation of the positive electrode: the positive electrode active material $LiNi_{0.8}Co_{0.1}Mn_{01}O_2$, the conductive agent acetylene black, and the binder PVDF were mixed in a mass ratio of 97:1:2, and then the solvent NMP was added to the resulting mixed material. The mixture was stirred under the action of a vacuum mixer until the system was uniform, and the positive electrode slurry was obtained. The positive electrode slurry was evenly coated on a positive electrode current collector, dried at room temperature, transferred to an oven for further drying, and then cold pressed and cut according to the required specifications to obtain a positive pole piece.

2) Preparation of the negative electrode: the negative electrode active material (graphite 93% + silicon-based material 7%), the conductive agent acetylene black, the thickener CMC, and the binder SBR were mixed in a mass ratio of 96.2:0.8:1.2:1.8, and then the solvent deionized water was added to the resulting mixed material. The mixture was stirred under the action of a vacuum mixer until the system was uniform, and the negative electrode slurry was obtained. The negative electrode slurry was evenly coated on a negative electrode current collector, dried at room temperature, transferred to an oven for further drying, and then cold pressed and cut according to required specifications to obtain a negative pole piece.

3) Assembly of the cell assembly: the positive pole piece, the separator film, and the negative pole piece were stacked in sequence so that the separator film was placed between the positive and negative pole pieces for isolation, and the cell assembly was then obtained through the process of stacking.

4) Liquid injection, chemical formation, and constant volume formation: the cell assembly was placed in the containing space of the battery shell, and after drying, the electrolyte was injected into the containing space of the battery shell. The lithium-ion battery of this example was obtained through processes such as vacuum packaging, standing still, formation, and shaping.

According to the above method, different experimental groups and comparative experimental groups are set by changing the volume V0 of the containing space of the battery shell, the total volume of the cell assembly, and the injection volume of the electrolyte as variables. The product information of each experimental group and each comparative experimental group is shown in Table 5. Among the groups, the external dimensions of the batteries, the dimensions of the inner cavities of the battery shells, and the dimensions of the cells of the experimental group 3-1, the experimental group 3-2, the experimental group 3-3, and the experimental group 3-4 are all the same.

Table 5: product information of each experimental group and each comparative experimental group in this example

| Group | Cell Assembly Process | Containing space Volume VO/mL | Total Volume of Cell Assembly V1/mL | Electrolyte Injection Volume/mL |
|---|---|---|---|---|
| Experimental Group 3-1 | stacking | 998 | 932.4 | 320 |
| Experimental Group 3-2 | stacking | 998 | 932.4 | 340 |

(continued)

| Group | Cell Assembly Process | Containing space Volume VO/mL | Total Volume of Cell Assembly V1/mL | Electrolyte Injection Volume/mL |
|---|---|---|---|---|
| Experimental Group 3-3 | stacking | 998 | 932.4 | 310 |
| Experimental Group 3-4 | stacking | 998 | 932.4 | 350 |

Test Example 3

1. Test Object

The lithium-ion battery prepared in Example 3 was used as the test object of this test example.

2. Test Items

(1) Volume of free electrolyte

The upper part of the lithium-ion battery as the test object was opened with a small opening, and the lithium-ion battery was placed upside down and left to stand for 30 minutes. The free electrolyte in the containing space of the battery shell was allowed to completely flow into a container, a balance was used to weigh the weight of the electrolyte flowing out, and a densitometer was used to measure the density to calculate the free electrolyte volume Vt.

(2) Cycle Performance of Lithium-ion Battery

At 45°C, the lithium-ion battery as the test object was charged at a rate of 1C and discharged at a rate of 1C, and a full-charging and full-discharging cycle test was performed until the capacity of the lithium-ion battery decayed to 80% of the initial capacity. The number of cycles was recorded, and it was observed whether the battery exhaust valve opened in the EOL state. The purpose of cycling at high temperature was to speed up aging and gas production.

3. Test Results:

The product structure parameters and performance indicators of the test objects in the examples are shown in Table 6. The product structure parameters and performance indicators of the test objects in the examples are shown in Table 4. The product structures of the lithium-ion batteries prepared in the experimental groups 2-1 to 2-5 satisfy the relational formula $5\% \leq \dfrac{Vt}{V0-V1} \leq 50\%$, and all of the batteries exhibit good cycle characteristics. During the test process of the test examples, the safety valves of the abovementioned test products did not open. This shows that these test products exhibit good safety and working stability.

Table 6: product structures and performance indicators of the test subjects in test example 3

| Test Product | V0 /mL | V1 /mL | Volume of Free Electrolyte Vt(mL) | $\dfrac{Vt}{V0-V1}$ | Cycle Performance/ Cycles | Remark |
|---|---|---|---|---|---|---|
| Experimental Group 3-1 | 998 | 932.4 | 7 | 10.67% | 1230 | no valve opening during cycle |
| Experimental Group 3-2 | 998 | 932.4 | 20 | 30.49% | 1120 | no valve opening during cycle |
| Experimental Group 3-3 | 998 | 932.4 | 3.5 | 5.34% | 1190 | no valve opening during cycle |
| Experimental Group 3-4 | 998 | 932.4 | 30 | 45.73% | 950 | no valve opening during cycle |

Example 4

1. Preparation of Lithium-ion Battery

In this example, a lithium-ion battery is prepared according to the following method:

1) Preparation of the positive electrode: the positive electrode active material lithium iron phosphate, the conductive agent acetylene black, and the binder PVDF were mixed in a mass ratio of 97:1:2, and then the solvent NMP was added to the resulting mixed material. The mixture was stirred under the action of a vacuum mixer until the system was uniform, and the positive electrode slurry was obtained. The positive electrode slurry was evenly coated on a positive electrode current collector, dried at room temperature, transferred to an oven for further drying, and then cold pressed and cut according to the required specifications to obtain a positive pole piece.

2) Preparation of the negative electrode: the negative electrode active material graphite, the conductive agent acetylene black, the thickener CMC, and the binder SBR were mixed in a mass ratio of 96.2:0.8:1.2:1.8, and then the solvent deionized water was added to the resulting mixed material. The mixture was stirred under the action of a vacuum mixer until the system was uniform, and the negative electrode slurry was obtained. The negative electrode slurry was evenly coated on a negative electrode current collector, dried at room temperature, transferred to an oven for further drying, and then cold pressed and cut according to required specifications to obtain a negative pole piece.

3) Assembly of the cell assembly: the positive pole piece, the separator film, and the negative pole piece were stacked in sequence so that the separator film was placed between the positive and negative pole pieces for isolation, and the cell assembly was then obtained through the process of winding.

4) Liquid injection, chemical formation, and constant volume formation: the cell assembly was placed in the containing space of the battery shell, and after drying, the electrolyte was injected into the containing space of the battery shell. The lithium-ion battery of this example was obtained through processes such as vacuum packaging, standing still, formation, and shaping.

According to the above method, different experimental groups and comparative experimental groups are set by changing the volume V0 of the containing space of the battery shell, the total volume of the cell assembly, and the injection volume of the electrolyte as variables. The product information of each experimental group and each comparative experimental group is shown in Table 7. Among the groups, the external dimensions of the batteries, the dimensions of the inner cavities of the battery shells, and the dimensions of the cells of the experimental group 4-1, the experimental group 4-2, the comparative experimental group 4-1, and the comparative experimental group 4-2 are all the same.

Table 7: product information of each experimental group and each comparative experimental group in this example

| Group | Cell Assembly Process | Containing space Volume VO/mL | Total Volume of Cell Assembly V1/mL | Electrolyte Injection Volume/mL |
|---|---|---|---|---|
| Experimental Group 4-1 | winding | 1012 | 935.6 | 419 |
| Experimental Group 4-2 | winding | 1012 | 935.6 | 433 |
| Comparative Experimental Group 4-1 | winding | 1012 | 935.6 | 402 |
| Comparative Experimental Group 4-2 | winding | 1012 | 935.6 | 440 |

Test Example 4

1. Test Object

The lithium-ion battery prepared in Example 4 was used as the test object of this test example.

2. Test Items

(1) Volume of free electrolyte

The upper part of the lithium-ion battery as the test object was opened with a small opening, and the lithium-ion battery was placed upside down and left to stand for 30 minutes. The free electrolyte in the containing space of the battery shell was allowed to completely flow into a container, a balance was used to weigh the weight of the electrolyte flowing out, and a densitometer was used to measure the density to calculate the free electrolyte volume Vt.

(2) Cycle Performance of Lithium-ion Battery

At 45°C, the lithium-ion battery as the test object was charged at a rate of 1C and discharged at a rate of 1C, and a full-charging and full-discharging cycle test was performed until the capacity of the lithium-ion battery decayed to 80% of the initial capacity. The number of cycles was recorded, and it was observed whether the battery exhaust valve opened in the EOL state. The purpose of cycling at high temperature was to speed up aging and gas production.

3. Test Results:

The product structure parameters and performance indicators of the test objects in the examples are shown in Table 8. It can be seen from the data shown in Table 8 that the product structures of the lithium-ion batteries prepared in the comparative experimental group 4-1 and the comparative experimental group 4-2 do not satisfy the relational formula $5\% \leq \dfrac{Vt}{V0-V1} \leq 50\%$. During the test process of the test examples, the abovementioned test products experienced valve opening, a rapid drop in capacity, or both. This shows that the working stability of these test products is poor. The product structures of the lithium-ion batteries prepared in the experimental group 4-1 and the experimental group 4-2 satisfy the relational formula $5\% \leq \dfrac{Vt}{V0-V1} \leq 50\%$, and both the batteries exhibit good cycle characteristics. During the test process of the test examples, the safety valves of the abovementioned test products did not open, and there was no rapid drop in battery capacity. This shows that these test products exhibit good safety and working stability.

Table 8: product structures and performance indicators of the test subjects in test example 4

| Test Product | V0 /mL | V1 /mL | Volume of Free Electrolyte Vt(mL) | $\dfrac{Vt}{V0-V1}$ | Cycle Performance/ Cycles | Remark |
|---|---|---|---|---|---|---|
| Experimental Group 4-1 | 1012 | 935.6 | 25 | 32.72% | 1520 | no valve opening during cycle |
| Experimental Group 4-2 | 1012 | 935.6 | 38 | 49.74% | 1630 | no valve opening during cycle |
| Comparative Experimental Group 4-1 | 1012 | 935.6 | 3.6 | 4.71% | 860 | no valve opening during cycle, but capacity drops rapidly |
| Comparative Experimental Group 4-2 | 1012 | 935.6 | 46 | 60.21% | 810 | valve opening during cycle, and capacity drops rapidly |

Example 5

1. Preparation of Lithium-ion Battery

In this example, a lithium-ion battery is prepared according to the following method:

1) Preparation of the positive electrode: the positive electrode active material lithium iron phosphate, the conductive agent acetylene black, and the binder PVDF were mixed in a mass ratio of 97:1:2, and then the solvent NMP was added to the resulting mixed material. The mixture was stirred under the action of a vacuum mixer until the system was uniform, and the positive electrode slurry was obtained. The positive electrode slurry was evenly coated on a positive electrode current collector, dried at room temperature, transferred to an oven for further drying, and then cold pressed and cut according to the required specifications to obtain a positive pole piece.

2) Preparation of the negative electrode: the negative electrode active material graphite, the conductive agent acetylene black, the thickener CMC, and the binder SBR were mixed in a mass ratio of 96.2:0.8:1.2:1.8, and then the solvent deionized water was added to the resulting mixed material. The mixture was stirred under the action of a vacuum mixer until the system was uniform, and the negative electrode slurry was obtained. The negative electrode slurry was evenly coated on a negative electrode current collector, dried at room temperature, transferred to an oven for further drying, and then cold pressed and cut according to required specifications to obtain a negative pole piece.

3) Assembly of the cell assembly: the positive pole piece, the separator film, and the negative pole piece were stacked in sequence so that the separator film was placed between the positive and negative pole pieces for isolation, and the cell assembly was then obtained through the process of winding.

4) Liquid injection, chemical formation, and constant volume formation: the cell assembly was placed in the containing space of the battery shell, and after drying, the electrolyte was injected into the containing space of the battery shell. The lithium-ion battery of this example was obtained through processes such as vacuum packaging, standing still, formation, and shaping.

According to the above method, different experimental groups and comparative experimental groups are set by changing the volume VO of the containing space of the battery shell, the total volume of the cell assembly, and the injection volume of the electrolyte as variables. The product information of each experimental group and each comparative experimental group is shown in Table 9. Among the groups, the external dimensions of the batteries, the dimensions of the inner cavities of the battery shells, and the dimensions of the cells of the experimental group 5-1, the experimental group 5-2, the comparative experimental group 5-1, and the comparative experimental group 5-2 are all the same.

Table 9: product information of each experimental group and each comparative experimental group in this example

| Group | Cell Assembly Process | Containing space Volume VO/mL | Total Volume of Cell Assembly V1/mL | Electrolyte Injection Volume/mL |
|---|---|---|---|---|
| Experimental Group 5-1 | winding | 123 | 110.55 | 50 |
| Experimental Group 5-2 | winding | 123 | 110.55 | 52 |
| Comparative Experimental Group 5-1 | winding | 123 | 110.55 | 48 |
| Comparative Experimental Group 5-2 | winding | 123 | 110.55 | 55 |

Test Example 5

1. Test Object

The lithium-ion battery prepared in Example 5 was used as the test object of this test example.

2. Test Items

(1) Volume of free electrolyte

The upper part of the lithium-ion battery as the test object was opened with a small opening, and the lithium-ion battery was placed upside down and left to stand for 30 minutes. The free electrolyte in the containing space of the battery shell was allowed to completely flow into a container, a balance was used to weigh the weight of the electrolyte flowing out, and a densitometer was used to measure the density to calculate the free electrolyte volume Vt.

(2) Cycle Performance of Lithium-ion Battery

At 45°C, the lithium-ion battery as the test object was charged at a rate of 1C and discharged at a rate of 1C, and a full-charging and full-discharging cycle test was performed until the capacity of the lithium-ion battery decayed to 80% of the initial capacity. The number of cycles was recorded, and it was observed whether the battery exhaust valve opened in the EOL state. The purpose of cycling at high temperature was to speed up aging and gas production.

3. Test Results:

The product structure parameters and performance indicators of the test objects in the examples are shown in Table 10. It can be seen from the data shown in Table 10 that the product structures of the lithium-ion batteries prepared in the comparative experimental group 5-1 and the comparative experimental group 5-2 do not satisfy the relational formula

$$5\% \le \frac{Vt}{V0 - V1} \le 50\%$$

. During the test process of the test examples, the abovementioned test products experienced valve opening, a rapid drop in capacity, or both. This shows that the working stability of these test products is poor. The product structures of the lithium-ion batteries prepared in the experimental group 5-1 and the experimental group 5-2 satisfy the relational formula $5\% \leq \dfrac{Vt}{V0-V1} \leq 50\%$, and both the batteries exhibit good cycle characteristics. During the test process of the test examples, the safety valves of the abovementioned test products did not open, and there was no rapid drop in battery capacity. This shows that these test products exhibit good safety and working stability.

Table 10: product structures and performance indicators of the test subjects in test example 5

| Test Product | V0 /mL | V1 /mL | Volume of Free Electrolyte Vt(mL) | $\dfrac{Vt}{V0-V1}$ | Cycle Performance/ Cycles | Remark |
|---|---|---|---|---|---|---|
| Experimental Group 5-1 | 123 | 110.55 | 4 | 32.13% | 1380 | no valve opening during cycle |
| Experimental Group 5-2 | 123 | 110.55 | 6 | 48.19% | 1400 | no valve opening during cycle |
| Comparative Experimental Group 5-1 | 123 | 110.55 | 0.4 | 3.21% | 760 | no valve opening during cycle, but capacity drops rapidly |
| Comparative Experimental Group 5-2 | 123 | 110.55 | 7.5 | 60.24% | 730 | valve opening during cycle, and capacity drops rapidly |

**Claims**

1. A battery, comprising a battery shell, a cell assembly, and an electrolyte the electrolyte and the cell assembly are disposed in a containing space of the battery shell, the electrolyte remaining in the containing space is a free electrolyte, a volume of the containing space is V0, a volume of the cell assembly is V1, a volume of the free electrolyte is Vt, and the battery being **characterized by** satisfying $\dfrac{Vt}{V0-V1}=5\%$ to 50%.

2. The battery according to claim 1, wherein the cell assembly comprises a positive pole piece and a negative pole piece, wherein:
the positive pole piece comprises a positive electrode active material, the positive electrode active material comprises at least one of lithium iron phosphate, lithium cobalt oxide, lithium manganate, lithium nickel cobalt manganese oxide, lithium manganese iron phosphate, and lithium nickel manganese oxide, the negative pole piece comprises a negative electrode active material, and the negative electrode active material comprises graphite.

3. The battery according to claim 2, wherein: the negative electrode active material is graphite, the positive electrode active material is lithium iron phosphate, and the battery satisfies $\dfrac{Vt}{V0-V1}=30\%$ to 50%.

4. The battery according to claim 2, wherein: the negative electrode active material is graphite, the positive electrode active material is lithium nickel cobalt manganese oxide, a material composition of the lithium nickel cobalt manganese oxide satisfies the following general formula $LiNi_xCo_yMn_{(1-x-y)}O_2$, in the general formula, $0.5 \leq x \leq 0.9$ and $0.05 \leq y \leq 0.2$, and the battery satisfies $\dfrac{Vt}{V0-V1}=15\%$ to 50%.

5. The battery according to claim 4, wherein: in the general formula $LiNi_xCo_yMn_{(1-x-y)}O_2$, $0.5 \leq x \leq 0.7$, and the battery satisfies $\dfrac{Vt}{V0-V1}=20\%$ to 50%.

6. The battery according to claim 4, wherein: in the general formula $LiNi_xCo_yMn_{(1-x-y)}O_2$, $0.7 < x \leq 0.9$, and the battery satisfies $\dfrac{Vt}{V0-V1} = 15\%$ to 40%.

7. The battery according to claim 2, wherein: the negative electrode active material further comprises a silicon-based material, and a content of the silicon-based material in the negative electrode active material is 3% to 10% calculated by mass percentage.

8. The battery according to claim 7, wherein: the silicon-based material comprises at least one of silicon oxide, nano silicon, silicon carbon, and silicon alloy, wherein the general formula of the silicon oxide is $SiO_x$, $0<x<2$.

9. The battery according to claim 7, wherein: the positive electrode active material is lithium iron phosphate, the battery satisfies $\dfrac{Vt}{V0-V1} = 20\%$ to 50%.

10. The battery according to claim 7, wherein: the positive electrode active material is lithium nickel cobalt manganese oxide, a material composition of the lithium nickel cobalt manganese oxide satisfies the following general formula $LiNi_xCo_yMn_{(1-x-y)}O_2$, in the general formula, $0.5<x\leq0.9$ and $0.05\leq y\leq0.2$, and the battery satisfies $\dfrac{Vt}{V0-V1} = 5\%$ to 40%.

11. The battery according to claim 10, wherein: in the general formula $LiNi_xCo_yMn_{(1-x-y)}O_2$, $0.5<x<\_0.7$, and the battery satisfies $\dfrac{Vt}{V0-V1} = 10\%$ to 40%.

12. The battery according to claim 10, wherein: in the general formula $LiNi_xCo_yMn_{(1-x-y)}O_2$, $0.7 < x \leq 0.9$, and the battery satisfies $\dfrac{Vt}{V0-V1} = 5\%$ to 30%.

**Patentansprüche**

1. Batterie, umfassend ein Batteriegehäuse, eine Zellanordnung und ein Elektrolyt, wobei der Elektrolyt und die Zellanordnung in einem umschließenden Raum des Batteriegehäuses angeordnet sind, wobei der im Behälter verbleibende Elektrolyt ein freier Elektrolyt ist, wobei ein Volumen des umschließenden Raums V0 ist, wobei ein Volumen der Zellanordnung V1 ist, wobei ein Volumen des freien Elektrolyts Vt ist, wobei die Batterie **dadurch gekennzeichnet ist, dass** $\dfrac{Vt}{V0-V1} = 5\%$ bis 50% erfüllt.

2. Batterie nach Anspruch 1, wobei die Zellanordnung einen positiven und einen negativen Polschuh umfasst, wobei: der positive Polschuh ein aktives Material für die positive Elektrode umfasst, wobei das aktive Material für die positive Elektrode mindestens eines der folgenden Materialien Lithium-Eisen-Phosphat, Lithium-Kobalt-Oxid, Lithium-Manganat, Lithium-Nickel-Kobalt-Mangan-Oxid, Lithium-Mangan-Eisen-Phosphat und Lithium-Nickel-Mangan-Oxid umfasst, wobei der negative Polschuh ein aktives Material für die negative Elektrode umfasst und das aktive Material für die negative Elektrode Graphit umfasst.

3. Batterie nach Anspruch 2, wobei: das aktive Material der negativen Elektrode Graphit ist, das aktive Material der positiven Elektrode Lithium-Eisen-Phosphat ist und die Batterie $\dfrac{Vt}{V0-V1} = 30\%$ bis 50% erfüllt.

4. Batterie nach Anspruch 2, wobei: das aktive Material der negativen Elektrode Graphit ist, das aktive Material der positiven Elektrode Lithium-Nickel-Kobalt-Mangan-Oxid ist, die Materialzusammensetzung des Lithium-Nickel-Kobalt-Mangan-Oxids die folgende allgemeine Formel $LiNi_xCo_yMn_{(1-x-y)}O_2$ erfüllt, wobei in der allgemeinen Formel $0{,}5{\leq}x{\leq}0{,}9$ und $0{,}05{\leq}y{\leq}0{,}2$ beträgt, und die Batterie $\frac{Vt}{V0-V1}=15\%$ bis 50% erfüllt.

5. Batterie nach Anspruch 4, wobei: in der allgemeinen Formel $LiNi_xCo_yMn_{(1-x-y)}O_2$ $0{,}5{\leq}x{\leq}0{,}7$ gilt und die Batterie $\frac{Vt}{V0-V1}=20\%$ bis 50% erfüllt.

6. Batterie nach Anspruch 4, wobei: in der allgemeinen Formel $LiNi_xCo_yMn_{(1-x-y)}O_2$ $0{,}7{\leq}x{\leq}0{,}9$ gilt und die Batterie $\frac{Vt}{V0-V1}=15\%$ bis 40% erfüllt.

7. Batterie nach Anspruch 2, wobei: das aktive Material der negativen Elektrode ferner ein siliziumbasiertes Material umfasst und der Anteil des siliziumbasierten Materials im aktiven Material der negativen Elektrode 3% bis 10% berechnet als Massenprozent beträgt.

8. Batterie nach Anspruch 7, wobei: das siliziumbasierte Material mindestens eines von Siliziumoxid, Nanosilizium, Siliziumkohlenstoff und einer Siliziumlegierung umfasst, wobei die allgemeine Formel des Siliziumoxids $SiO_x$ ist, wobei $0{<}x{<}2$ gilt.

9. Batterie nach Anspruch 7, wobei: das aktive Material der positiven Elektrode Lithium- Eisen-Phosphat ist und die Batterie $\frac{Vt}{V0-V1}=20\%$ bis 50% erfüllt.

10. Batterie nach Anspruch 7, wobei: das das aktive Material der positiven Elektrode Lithium-Nickel-Kobalt-Mangan-Oxid ist und die Materialzusammensetzung des Lithium-Nickel-Kobalt-Mangan-Oxids die folgende allgemeine Formel $LiNi_xCo_yMn_{(1-x-y)}O_2$ erfüllt, wobei in der allgemeinen Formel $0{,}5{\leq}x{\leq}0{,}9$ und $0{,}05{\leq}y{\leq}0{,}2$ beträgt, und die Batterie $\frac{Vt}{V0-V1}=5\%$ bis 40% erfüllt.

11. Batterie nach Anspruch 10, wobei: in der allgemeinen Formel $LiNi_xCo_yMn_{(1-x-y)}O_2$ $0{,}5{\leq}x{\leq}0{,}7$ gilt und die Batterie $\frac{Vt}{V0-V1}=10\%$ bis 40% erfüllt.

12. Batterie nach Anspruch 10, wobei: in der allgemeinen Formel $LiNi_xCo_yMn_{(1-x-y)}O_2$ $0{,}7{\leq}x{\leq}0{,}9$ gilt und die Batterie $\frac{Vt}{V0-V1}=5\%$ bis 30% erfüllt.

**Revendications**

1. Batterie, comprenant une enveloppe de batterie, un ensemble de cellules et un électrolyte, l'électrolyte et l'ensemble de cellules étant disposés dans un espace de confinement de l'enveloppe de batterie, l'électrolyte restant dans l'espace de confinement étant un électrolyte libre, un volume de l'espace de confinement étant V0, un volume de l'ensemble de cellules étant V1, un volume de l'électrolyte libre étant Vt, et la batterie étant **caractérisée en ce qu'**elle satisfait à la relation $\frac{vt}{v0-v1}=5\%$ à 50 %.

2. Batterie selon la revendication 1, dans laquelle l'ensemble de cellule comprend une pièce de pôle positif et une pièce de pôle négatif, dans laquelle la pièce de pôle positif comprend un matériau actif d'électrode positive, le matériau actif d'électrode positive comprend au moins l'un parmi le phosphate de fer lithié, l'oxyde de cobalt lithié, le manganate de lithium, l'oxyde de nickel-cobalt-manganèse lithié, le phosphate de manganèse-fer lithié et l'oxyde de nickel-manganèse lithié, la pièce de pôle négatif comprend un matériau actif d'électrode négative, et le matériau actif de l'électrode négative comprend du graphite.

3. Batterie selon la revendication 2, dans laquelle : le matériau actif de l'électrode négative est du graphite, le matériau actif de l'électrode positive est du phosphate de fer lithié, et la batterie satisfait à $\frac{vt}{v0-v1} = 30\%$ à 50 %.

4. Batterie selon la revendication 2, dans laquelle : le matériau actif de l'électrode négative est du graphite, le matériau actif de l'électrode positive est de l'oxyde de lithium, de nickel, de cobalt et de manganèse, une composition du matériau de l'oxyde de lithium, de nickel, de cobalt et de manganèse satisfait à la formule générale suivante : $LiNi_xCo_yMn_{(1-x-y)}O_2$, dans la formule générale, $0,5 \leq x \leq 0,9$ et $0,05 \leq y \leq 0,2$, et la batterie satisfait à $\frac{vt}{v0-v1} = 15\%$ à 50 %.

5. Batterie selon la revendication 4, dans laquelle : dans la formule générale $LiNi_xCo_yMn_{(1-x-y)}O_2$, $0,5 \leq x \leq 0,7$, et la batterie satisfait à $\frac{vt}{v0-v1} = 20\%$ à 50 %.

6. Batterie selon la revendication 4, dans laquelle : dans la formule générale $LiNi_xCo_yMn_{(1-x-y)}O_2$, $0,7 < x \leq 0,9$, et la batterie satisfait à $\frac{vt}{v0-v1} = 15\%$ à 40 %.

7. Batterie selon la revendication 2, dans laquelle : le matériau actif de l'électrode négative comprend en outre un matériau à base de silicium, et une teneur en matériau à base de silicium dans le matériau actif de l'électrode négative est comprise entre 3 % et 10 % en pourcentage massique.

8. Batterie selon la revendication 7, dans laquelle : le matériau à base de silicium comprend au moins l'un des composés suivants : oxyde de silicium, nano-silicium, carbure de silicium et alliage de silicium, la formule générale de l'oxyde de silicium étant $SiO_x$, $0 < x < 2$.

9. Batterie selon la revendication 7, dans laquelle : le matériau actif de l'électrode positive est du phosphate de fer lithié, la batterie satisfait à $\frac{vt}{v0-v1} = 20\%$ à 50 %.

10. Batterie selon la revendication 7, dans laquelle : le matériau actif de l'électrode positive est de l'oxyde de lithium-nickel-cobalt-manganèse, une composition du matériau de l'oxyde de lithium-nickel-cobalt-manganèse satisfait à la formule générale suivante : $LiNi_xCo_yMn_{(1-x-y)}O_2$, dans la formule générale, $0,5 \leq x \leq 0,9$ et $0,05 \leq y \leq 0,2$, et la batterie satisfait à $\frac{vt}{v0-v1} = 5\%$ à 40 %.

11. Batterie selon la revendication 10, dans laquelle : dans la formule générale $LiNi_xCo_yMn_{(1-x-y)}O_2$, $0,5 \leq x \leq 0,7$, et la batterie satisfait à $\frac{vt}{v0-v1} = 10\%$ à 40 %.

12. Batterie selon la revendication 10, dans laquelle : dans la formule générale $LiNi_xCo_yMn_{(1-x-y)}O_2$, $0,7 < x \leq 0,9$, et la batterie satisfait à $\frac{vt}{v0-v1} = 5\%$ à 30 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3958362 A1
- US 2017170512 A1
- JP 2018147594 A

**Non-patent literature cited in the description**

- **AN SEONG JIN et al.** Electrolyte Volume Effects on Electrochemical Performance and Solid Electrolyte Interphase in Si-Graphite/NMC Lithium-Ion Pouch Cells. *Applied Materials & Interfaces*, 15 May 2017, vol. 9 (22), 18799-18808
- **LANDA-MEDRANO IMANOL et al.** Insights into the Electrochemical Performance of 1.8 Ah Pouch and 18650 Cylindrical NMC:LFP Si:C Blend Li-ion Cells. *Batteries*, August 2022, vol. 8 (8), 97